# FASCICULE DE BREVET EUROPEEN

(11) **EP 0 455 536 B1**
(45) Date de publication et mention de la délivrance du brevet: **25.01.1995**
(21) Numéro de dépôt: 91401046.7
(22) Date de dépôt: 19.04.1991
(51) Int. Cl.: G05B 19/18

(54) **Procédé et système pour la réalisation d'une surface de référence plane, définie par une équation déterminée, sur un bâti d'assemblage d'une structure, à partir d'une surface brute**
Prozess und Vorrichtung zur Realisierung einer ebenen Referenzoberfläche, definiert durch eine vorgegebene Gleichung, auf einem Tragwerk zum Zusammenbauen von Strukturen, von einer rauhen Oberfläche ausgehend
Process and system for realisation of a flat reference surface, defined by a determined equation on a structure assembly jig from a rough surface

(30) Priorité: 04.05.1990 FR 9005650
(43) Date de publication de la demande: 06.11.1991
(73) Titulaire: EUROCOPTER FRANCE, F-13725 Marignane Cédex (FR)
(72) Inventeur: Rodriguez, Georges Jean, F-13180 GIGNAC-LA-NERTHE (FR)
(74) Mandataire: Bonnetat, Christian

(56) Documents cités:
- US-A- 4 559 684
- US-A- 4 754 415

## Description

La présente invention concerne un procédé de réalisation d'une surface de référence plane, définie par une équation déterminée, sur un bâti d'assemblage d'une structure, à partir d'une surface brute, ainsi qu'un système pour la mise en oeuvre dudit procédé.

Plus particulièrement, quoique non exclusivement, la présente invention s'applique au domaine de la construction aéronautique, et notamment la construction d'hélicoptères.

La fabrication des hélicoptères est une opération complexe mettant en oeuvre des techniques élaborées et faisant appel à des normes de fabrication extrêmement sévères. Ces normes sont imposées par deux impératifs :
- la sécurité d'utilisation du produit,
- la garantie d'une qualité égale de fabrication tout au long de la vie du produit afin d'assurer :
   . d'une part, en cours de fabrication, l'assemblage sans retouche des différents éléments constituant le produit,
   . d'autre part, après fabrication, l'approvisionnement des clients en pièces de rechange standard.

Ainsi, l'assemblage des éléments constituant la structure, par exemple, d'un hélicoptère, doit répondre à des impératifs d'interchangeabilité. Afin d'assurer cette interchangeabilité, les éléments en cours d'assemblage sont maintenus en place sur des bâtis à l'aide de ferrures fixées sur des plages, c'est-à-dire des plaquettes d'acier de forme parallélépipédique, scellées au bâti.

De façon générale, les bâtis d'assemblage sont réalisés à partir de tubes de section carrée relativement légers, mais de grande inertie. Leur assemblage peut être effectué par soudage à l'arc, suivi d'un traitement de détente après soudure. On obtient ainsi des bâtis présentant une grande rigidité à la flexion et à la torsion, tout en étant de fabrication simple et bon marché. Lorsque le bâti est terminé, il est amené sur son lieu d'implantation, et définitivement scellé au sol. La nécessité de prévoir les plages mentionnées ci-dessus s'explique par le fait que les faces brutes de soudage du bâti ne sont pas assez précises pour servir de base de fixation aux différentes ferrures. Les plages sont scellées aux poutres du bâti par collage à l'aide d'une résine ou analogue, ce qui autorise un rattrapage des écarts entre les plages, que permettra l'épaisseur de résine admissible pour le collage. En fait, jusqu'à présent, le réglage des plages est réalisé par la mise en place de gabarits et d'étalons sur lesdits bâtis. Puis, celles-ci sont scellées, et les ferrures servant au maintien des éléments à assembler sont fixées sur les plages.

Ces gabarits et étalons sont nécessaires aussi bien au moment de la fabrication de nouveaux bâtis que pour la vérification périodique de bâtis en service.

Cela impose de fabriquer de nombreux et encombrants gabarits et étalons, et nécessite une gestion lourde et coûteuse de ces outillages pour le contrôle périodique des bâtis.

Il serait donc souhaitable d'éviter d'avoir à employer de tels gabarits et étalons. Cependant, cela soulève un nouveau problème dans la mesure où les plages ne seraient ainsi plus maintenues en place par des gabarits rigides, en rendant totalement inefficace la méthode, utilisée jusqu'à présent, consistant à coller les plages aux poutres du bâti.

La présente invention a pour but d'éviter ces inconvénients, et concerne un procédé de réalisation d'une surface de référence plane, définie par une équation déterminée, sur un bâti d'assemblage d'une structure, à partir d'une surface brute, procédé notamment applicable à l'usinage d'une plage, telle que définie ci-dessus, après soudage de celle-ci sur une poutre du bâti d'assemblage. Cet usinage permet d'éviter d'avoir recours aux gabarits et étalons utilisés jusqu'à présent, tout en évitant le problème relatif au collage usuel de la plage, celle-ci étant simplement soudée à la poutre correspondante du bâti.

A cet effet, le procédé de réalisation d'une surface de référence plane, définie par une équation déterminée, sur un bâti d'assemblage d'une structure, à partir d'une surface brute, est remarquable, selon l'invention, en ce que :
- on emmagasine, dans des moyens de mémoire, les données relatives à l'équation de ladite surface de référence ;
- on détermine, à l'aide de moyens de visée optiques, des données permettant de calculer l'équation de ladite surface brute ;
- on compare, dans une unité de traitement d'informations, les données relatives, d'une part, à l'équation de ladite surface de référence et, d'autre part, à l'équation de ladite surface brute ;
- on positionne un dispositif d'usinage mobile au voisinage de ladite surface brute ; et
- on rectifie, à l'aide dudit dispositif d'usinage commandé par des ordres déterminés en fonction de ladite comparaison et fournis par ladite unité de traitement d'informations, ladite surface brute, de façon à faire coïncider le plan de celle-ci avec celui de ladite surface de référence.

Ainsi, en considérant notamment l'application décrite ci-dessus, le système de l'invention permet de rectifier "in situ" les plaquettes ou plages supportant les fixations des éléments de structure, qui peuvent être alors simplement soudées au bâti, tout en évitant de recourir aux gabarits et étalons utilisés jusqu'à présent.

Contrairement à l'usinage habituel, dans lequel le dispositif d'usinage est à poste fixe, dans ce cas, le dispositif d'usinage est mobile et positionné par rapport à la pièce devant être usinée, c'est-à-dire le bâti d'assemblage.

Avantageusement, après un processus d'initialisation permettant d'amener les différents axes du dispositif d'usinage dans une position prédéterminée, le plan de travail de l'outil de ce dernier est amené parallèlement au plan de ladite surface de référence.

De préférence, les ordres de commande du dispositif d'usinage fournis par ladite unité de traitement d'informations sont corrigés pour tenir compte de la déformation du bâti engendrée par l'installation du dispositif d'usinage sur celui-ci.

La présente invention concerne également un système pour la réalisation d'une surface de référence plane, définie par une équation déterminée, sur un bâti d'assemblage d'une structure, à partir d'une surface brute, pour la mise en oeuvre du procédé précédemment défini, remarquable selon l'invention en ce qu'il comprend :
- des moyens de mémoire pour emmagasiner les données relatives à l'équation de ladite surface de référence ;
- des moyens de visée optiques pour déterminer des données permettant de calculer l'équation de ladite surface brute ;
- un dispositif d'usinage mobile, adapté pour être monté, de façon amovible, sur une poutre du bâti au voisinage de ladite surface brute ; et
- une unité de traitement d'informations, adaptée pour comparer les données relatives, d'une part, à l'équation de ladite surface de référence et, d'autre part, à l'équation de ladite surface brute, et fournir, à partir de cette comparaison, des ordres audit dispositif d'usinage ainsi commandé de façon à faire coïncider le plan de ladite surface brute avec celui de ladite surface de référence.

Avantageusement, ledit dispositif d'usinage est monté sur une poutre du bâti au moyen de deux cadres rectangulaires supportant un plateau bloqué contre le dessous de la poutre.

Selon une autre caractéristique de l'invention, ledit dispositif d'usinage comporte une table à mouvements croisés X,Y. La table à mouvements croisés X,Y peut être solidaire d'un premier plateau pouvant tourner autour d'un premier axe Y, l'ensemble table - premier plateau étant lui-même monté sur un second plateau pouvant tourner autour d'un second axe X orthogonal audit premier axe et parallèle à ladite table. Par ailleurs, ledit dispositif d'usinage peut comporter des moyens de translation selon un troisième axe Z orthogonal au plan de ladite table à mouvements croisés X,Y.

De préférence, ledit dispositif d'usinage comporte un outil entraîné en rotation par l'intermédiaire d'un engrenage comportant un pignon conique engrenant avec une roue conique liée à l'arbre de l'outil.

Selon encore une autre caractéristique de l'invention, lesdits moyens de visée optiques sont constitués par un dispositif informatique de mesure à distance muni de théodolites électroniques reliés à un calculateur.

En particulier, lesdits moyens de visée optiques peuvent être associés à des moyens de mémoire supplémentaires dans lesquels sont emmagasinées les données relatives aux équations d'une pluralité de surfaces de référence.

Les figures du dessin annexé feront bien comprendre comment l'invention peut être réalisée.
La figure 1 illustre schématiquement un exemple de réalisation du système pour la réalisation de surfaces de référence planes, définies, chacune, par une équation déterminée, sur un bâti d'assemblage d'une structure, à partir de surfaces brutes.
La figure 2 est une vue avant en perspective avec arrachement du dispositif d'usinage utilisé dans le système de l'invention.
La figure 3 est une vue arrière en perspective avec arrachement du dispositif d'usinage de la figure 2.
La figure 4 montre schématiquement une mire utilisée dans la mise en oeuvre du système de l'invention.
La figure 5 montre une surface brute à rectifier pour obtenir une surface de référence.
La figure 6 montre des points caractéristiques du dispositif d'usinage, utilisés dans la mise en oeuvre du système de l'invention.

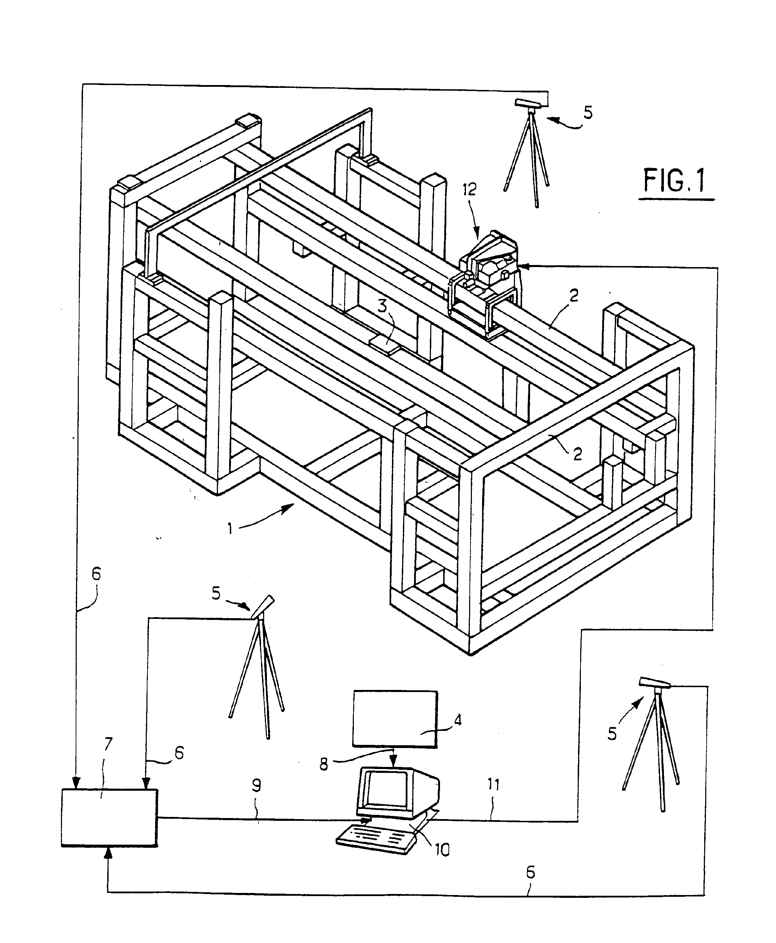

On a représenté schématiquement, sur la figure 1, un système selon l'invention destiné à usiner les plages ou plaquettes, telles que définies ci-dessus, d'un bâti 1 d'assemblage d'une structure, par exemple un hélicoptère, bâti constitué, comme déjà indiqué, de poutres ou tubes 2 de section carrée, en des endroits déterminés desquels sont disposées des plaquettes 3 soudées aux tubes respectifs. Le système de l'invention permet de réaliser, comme déjà indiqué, une surface de référence plane, définie par une équation déterminée, sur ledit bâti, à partir d'une surface brute.

De façon générale, le système comprend :
- des moyens de mémoire 4, dans lesquels sont emmagasinées les données relatives à l'équation de la surface de référence de chaque plaquette 3 à usiner ;
- des moyens de visée optiques pour déterminer des données permettant de calculer l'équation de la surface brute de la plaquette, comportant des théodolites électroniques 5, au nombre de trois dans l'exemple représenté, reliés, chacun, par une liaison 6, à un calculateur 7 (de tels moyens de visée optiques sont par exemple fabriqués et vendus par la Société suisse KERN SA) ;
- les moyens de mémoire 4 et le calculateur 7 sont reliés, par les liaisons respectives 8 et 9, à une unité de traitement d'informations 10, adaptée pour comparer les données relatives, d'une part, à l'équation de ladite surface de référence et, d'autre part, à l'équation de ladite surface brute, et fournir, à partir de cette comparaison, des ordres, transmis par la liaison 11, pour commander un dispositif d'usinage 12 de façon à faire coïncider le plan de ladite surface brute avec celui de ladite surface de référence.

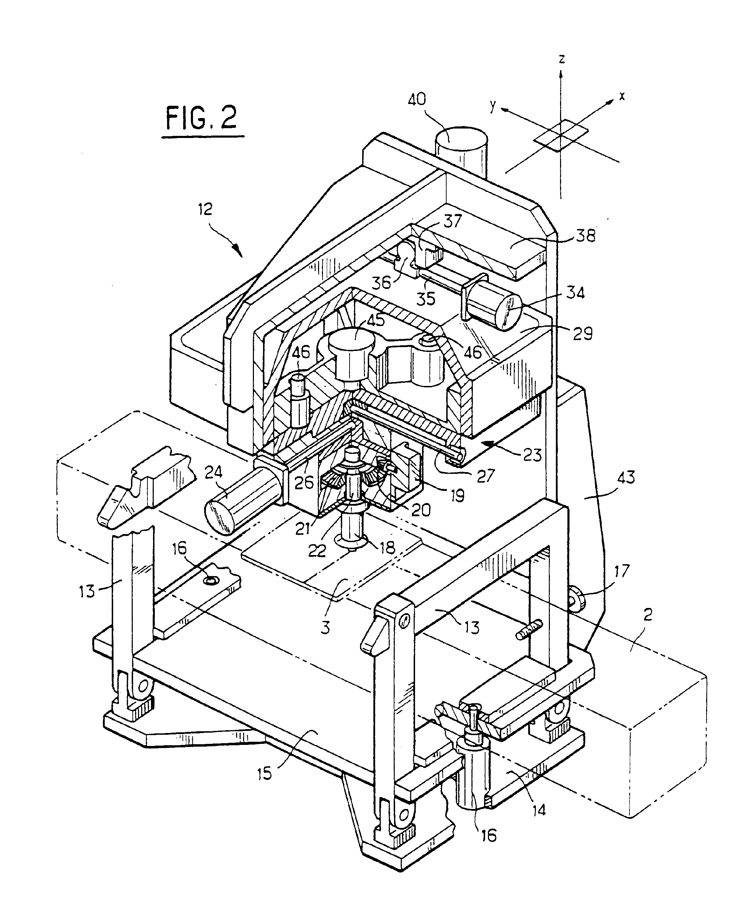

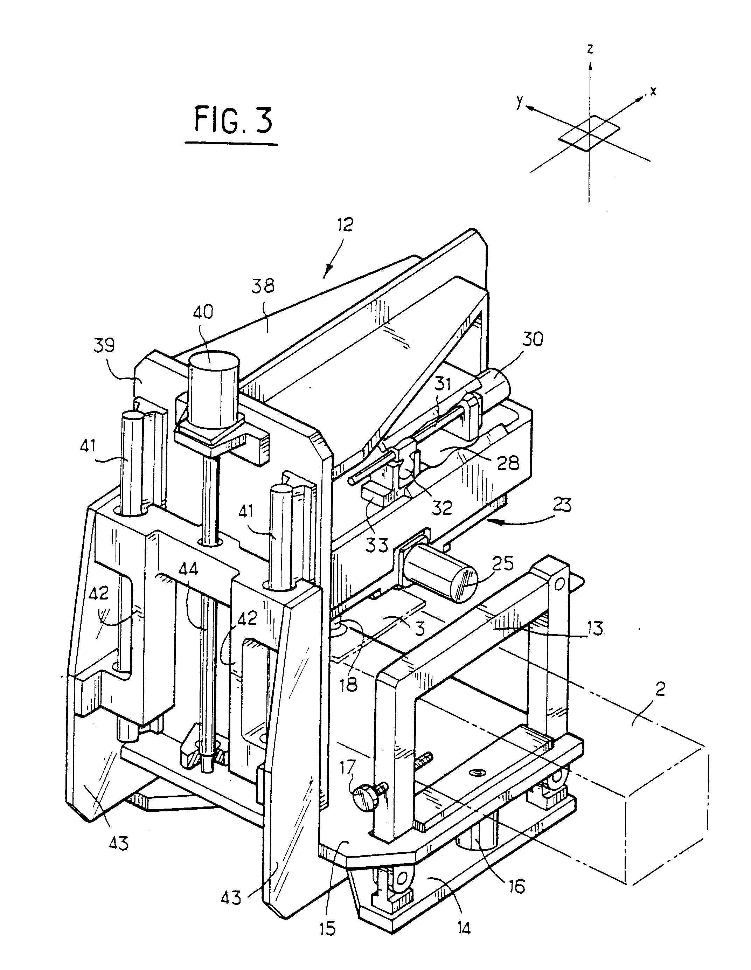

En se référant maintenant aux figures 2 et 3, le dispositif d'usinage 12 est monté, de façon amovible, sur un tube 2 du bâti au niveau d'une plaquette 3 à usiner, au moyen de deux cadres rectangulaires 13 montés sur une embase 14 et supportant un plateau 15 interchangeable selon l'emplacement de la plaquette à usiner, ledit plateau 15 étant bloqué contre le dessous de tube 2 grâce à des vérins hydrauliques 16 solidaires de l'embase 14, des vis 17 assurant le blocage latéral des cadres 13 contre le tube 2.

Le dispositif d'usinage 12 comporte un outil 18, notamment une fraise comme représentée ou un foret de perçage, entraîné par un moteur hydraulique 19 par l'intermédiaire d'un engrenage comportant un pignon conique 20, lié au moteur 19, engrenant avec une roue conique 21, liée à l'arbre 22 de l'outil 18.

La fonction essentielle du dispositif d'usinage 12 est de corriger les écarts de fabrication du bâti brut après soudure.

Pour pouvoir effectuer l'usinage grâce à l'outil 18, trois mouvements de translation selon les axes X,Y,Z sont nécessaires, tandis que, pour obtenir une orientation correcte de l'outil 18 dans l'espace, deux mouvements sont nécessaires permettant des rotations autour des axes X et Y.

A cet effet, on prévoit une table à mouvements croisés X,Y 23 (l'outil 18 étant monté sous la table X,Y 23), un premier moteur pas-à-pas 24 assurant le déplacement selon l'axe X (figure 2), tandis qu'un second moteur pas-à-pas 25 assure le déplacement selon l'axe Y (figure 3), et cela par l'intermédiaire d'organes de liaison du type vis-écrou appropriés 26 et 27, respectivement. Le guidage est de plus assuré, de façon connue, par des rails et glissières, non représentés.

Par ailleurs, pour obtenir l'orientation indiquée de l'outil 18 dans l'espace, la table à mouvements croisés X,Y 23 est solidaire d'un premier plateau 28 susceptible de tourner autour de l'axe Y, cet ensemble étant lui-même monté sur un second plateau 29 pouvant tourner autour de l'axe X.

La rotation du plateau 28 autour de l'axe Y est assurée par un moteur pas-à-pas 30 relié, par l'intermédiaire d'organes de liaison appropriés 31, du type vis-écrou, à une rotule 32 pouvant pivoter dans une embase 33 solidaire du premier plateau 28. De même, la rotation du plateau 29 autour de l'axe X est assurée par un moteur pas-à-pas 34 relié, par l'intermédiaire d'organes de liaison appropriés 35, du type vis-écrou, à une rotule 36 pouvant pivoter dans une embase 37 solidaire de la console 38.

En outre, la translation selon l'axe Z doit permettre de :
- régler la profondeur de passe lors de la phase de fraisage ; et
- positionner l'outil lors du perçage.

Pour cela, on prévoit, d'une part, une table 39, solidaire de ladite console 38 et s'étendant perpendiculairement à celle-ci parallèlement à l'axe Z, sur laquelle est montée un moteur pas-à-pas 40 et qui est guidée, dans son déplacement selon l'axe Z, sur des colonnes 41 pouvant coulisser dans des glissières correspondantes 42 montées sur des pattes de support 43 solidaires du plateau 15, le moteur 40 entraînant un ensemble vis-écrou 44 lié au plateau 15. D'autre part, un vérin hydraulique 45 est guidé sur des colonnes 46 solidaires de la table X,Y 23.

Le système selon l'invention peut être mis en oeuvre de la façon suivante.

Tout d'abord, il convient de noter que les mouvements du dispositif d'usinage sont calculés dans un repère lié à celui-ci. Ces mouvements sont élaborés à partir d'un repère, lié au modèle du bâti 1 à réaliser, issu de l'unité de traitement d'informations 10. Avant d'effectuer l'usinage des plaquettes ou plages 3 d'un bâti 1, il sera donc nécessaire d'effectuer au préalable la mise en concordance du repère lié au dispositif d'usinage avec celui décrivant le bâti.

Par ailleurs, les informations relatives aux équations des surfaces de référence des plaquettes ou plages à usiner sont contenues dans un premier fichier, tandis que, après une visée de l'ensemble des plages à usiner, les informations relatives aux équations des surfaces brutes des plages seront stockées dans un second fichier.

Dans une première étape, le bâti est orienté selon un système de référence donné X,Y,Z ne prenant pas en compte la position réelle des plages qui sont fixées audit bâti. A partir des informations contenues dans les premier et second fichiers, l'écart entre les surfaces brutes et les surfaces de référence peut être minimisé, en réorientant le bâti plan par plan.

Ensuite, comme l'accrochage du dispositif d'usinage sur le bâti peut déformer ce dernier, il est nécessaire de déterminer des coordonnées corrigées pour la surface de référence, qui seront utilisées pour commander le dispositif d'usinage.

Puis, un processus d'initialisation permet d'amener les différents axes du dispositif d'usinage dans une position prédéterminée, le plan de travail de l'outil (par exemple une fraise) est amené parallèlement au plan de la surface de référence, et l'usinage proprement dit peut alors être réalisé, en tenant compte bien entendu du passage du repère du bâti au repère du dispositif d'usinage.

Ces différentes étapes seront explicitées plus en détail ci-après.

Le premier fichier fournit, comme déjà indiqué, les données théoriques nécessaires à l'usinage de chaque plaquette ou plage (surface de référence).

La description d'une plage est répartie sur plusieurs enregistrements, chaque enregistrement étant constitué de sept champs.

Le premier champ contient un code définissant la signification de l'enregistrement :
N : vecteur normal à la plage (Vtn)
O : position du centre de la plage (Ctp)
P : coordonnées du trou à réaliser.

Le deuxième champ contient le numéro de la plage à laquelle se rapporte l'information.

Le troisième champ n'est utilisé que pour les enregistrements contenant un code P et indique l'ordre dans lequel s'effectue le perçage.

Les trois champs suivants contiennent :
- soit les valeurs du vecteur normal à la plage si le code d'enregistrement est N ;
- soit les coordonnées du centre de la plage théorique si le code d'enregistrement est O ;
- soit les coordonnées du trou à réaliser si le code d'enregistrement est P.

Le dernier champ contient :
- la largeur L de la plage si le code en tête d'enregistrement est O,
- le diamètre du trou à réaliser si le code d'enregistrement est P.

Le second fichier fournit, à partir des mesures effectuées à l'aide des théodolites 5, les données permettant de définir le bâti réel et son environnement. Ces données sont les coordonnées x,y,z des points visés.

Chaque enregistrement contient six champs.

Le premier champ contient un code définissant la signification de l'enregistrement :
M : ensemble des points appartenant à la machine,
P : ensemble des points appartenant à la mire, définie ci-après,
O : coordonnées d'un des coins de la plage réelle (surface brute).

Le deuxième champ contient l'indice du point visé.

Le troisième champ contient le numéro de la plage à laquelle se rapporte l'information.

Les trois champs suivants contiennent les valeurs des coordonnées des points.

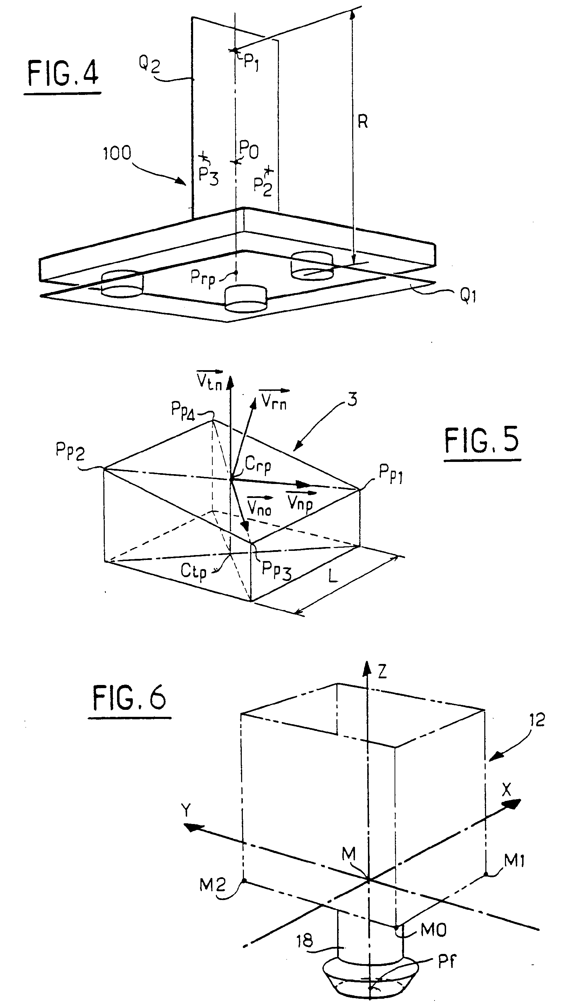

Comme on peut le voir sur la figure 4, la mire 100 est la concrétisation de deux plans orthogonaux l'un par rapport à l'autre :
- un premier plan Q1 formé des trois pieds d'embase,
- second plan Q2 normal au premier et contenant les points PO, P1, P2, P3.

La géométrie de la mire est connue grâce aux données suivantes :
- la distance R du point P1 au plan Q1,
- la distance P2 P3,
- les points PO P2 P3 sont alignés,
- PO est situé à égale distance de P2 et P3,
- la droite P1 PO est normale au plan Q1.

La mire est utilisée, lors de la réorientation du système de coordonnées, pour déterminer la position de la plage réelle et, lors de l'usinage, la mire est utilisée pour déterminer :
- le déplacement de la plage réelle dû à l'accrochage du dispositif d'usinage,
- l'orientation et la position de la plage réelle dans l'espace.

A partir de ces données, on peut calculer les coordonnées du point PO à partir des coordonnées des points P2 et P3, le point PO étant situé au milieu du segment P2 P3. Il est possible de même de calculer les coordonnées du point Prp qui est le point d'intersection entre le plan Q1 et la droite passant par PO P1.

A partir des points visés sur la mire PO, P1, P2 et P3, on peut déduire les informations suivantes :
Vrn: vecteur normal à la plage réelle de droite di- rectrice PO ^{P1} ;
Prp : intersection de la droite PO P1 et du plan de base Q1.

Par ailleurs, en se référant à la figure 5, les données décrivant la plage réelle, c'est-à-dire la surface brute obtenue après implantation du bâti, sont les suivantes :
- le trièdre formé des vecteurs vnc, Vnp, Vrn,
- le point cité précédemment Prp appartient aussi à cette plage,
- la position des quatre coins Pp1, Pp2, Pp3, Pp4,
- la position du centre de la plage réelle Crp.

De même, la plage théorique (surface de référence), fournie par l'unité de traitement d'informations et que l'on doit obtenir après usinage, est décrite à l'aide de :
- vtn: vecteur normal à la plage théorique,
- Ctp : position du centre de la plage théorique,
- L : largeur de la plage.

En outre, en se référant à la figure 6, la position du dispositif d'usinage est déterminée par la visée de trois points MO, M1, M2. Sa géométrie étant connue, on définit des points caractéristiques :
- M : intersection du plan MO, M1, M2, et de l'axe de rotation de l'outil,
- 0 : origine du mouvement du dispositif d'usinage, ce point étant situé à l'intersection des axes de rotation du plateau de correction à l'issue de la phase d'initialisation des axes de la machine,
- Pf : coordonnées du point situé à l'extrémité de l'outil.

Une première orientation du système de référence est effectuée, indiquant la direction des axes de coordonnées X,Y,Z et donnant l'échelle de mesure de ces axes. Cette orientation ne prend pas en compte la réalité du bâti et la position réelle des plages surce- lui-ci.

Afin d'en tenir compte, un programme propose les corrections à apporter au système de référence initial. Les fonctions essentielles assurées par celui-ci ont pour objet d'assurer la faisabilité de l'usinage par enlèvement de matière de toutes les plages, tout en minimisant l'écart entre celles-ci afin d'en optimiser l'usinage, et en mettant en concordance les repères réel et théorique.

Il s'agit en fait d'effectuer un "balançage idéal" du bâti.

Afin d'assurer une bonne accessibilité aux éléments en cours d'assemblage dans le bâti, les poutres ou tubes qui constituent son ossature sont disposés parallèlement aux axes de référence, et les plages qui y sont fixées suivent donc cette géométrie.

L'ensemble des plages d'un bâti peut donc être divisé en trois classes :
- les plages présentant un vecteur normal théorique colinéaire à l'axe X ;
- celles présentant un vecteur normal théorique colinéaire à l'axe Y ; et
- celles présentant un vecteur normal théorique colinéaire à l'axe Z.

Chacune de ces plages peut, à son tour, être subdivisée en deux catégories :
- celle dont le vecteur normal est orienté selon le sens positif de l'axe ;
- celle dont le vecteur normal est orienté selon le sens négatif de l'axe.

La méthode utilisée pour effectuer ce balançage mathématique du bâti est la méthode des moindres carrés permettant de minimiser l'écart entre les plages réelles et les plages théoriques (surfaces brutes et surfaces de référence).

Cette méthode nécessite pour sa mise en oeuvre la modélisation des écarts par des relations linéaires en fonction des paramètres à optimiser, ce qui impose que l'erreur angulaire entre les deux repères soit petite, ce qui est parfaitement le cas : l'erreur de définition due au cumul des écarts d'orientation initiale du système de visée et des écarts de forme du bâti reste inférieure à 1°.

La réorientation du bâti s'effectue plan par plan :
- le premier plan fournissant deux rotations et une translation ;
- le second une rotation et une translation ; et
- le troisième la dernière translation.

Cette mise en oeuvre plan par plan impose que toutes les plages sélectionnées pour le calcul de réorientation présentent un plan final normal à l'un des axes du bâti, ce qui est le cas de l'ensemble des plages d'un bâti.

En revanche, le fait que, dans une classe de plages, puissent exister des plages présentant des vecteurs normaux de sens opposés, pose un problème pour la réorientation.

En effet, l'algorithme cherche la position du plan optimum afin de minimiser la distance des plages réelles aux plans théoriques.

Chaque catégorie de plages définit un plan moyen indépendant. Il existe donc deux plans de plages distincts par plan de référence du bâti. L'espace entre ces deux plans étant important, le calcul d'un plan intermédiaire ne peut s'obtenir directement par la méthode des moindres carrés, celle-ci ne prenant pas en compte le sens d'usinage. Certaines plages après correction risqueraient d'avoir un sens d'usinage négatif (ce qui reviendrait à rajouter de la matière).

Il convient donc de sélectionner une catégorie de plages qui doit être la plus représentative du plan de référence du bâti auquel elle appartient.

Le choix de cette catégorie est basé sur la surface calculée à partir des plages extrêmes de chaque catégorie. Les corrections ainsi obtenues en s'appuyant sur la surface la plus importante ont toutes les chances d'être applicables à l'autre catégorie de plages si l'on suppose le bâti correctement construit.

On effectue une mesure de la position de l'ensemble des plages à l'aide de la mire précédemment décrite, dans le référentiel défini initialement par le système de visée. Afin de réduire le nombre des visées et puisqu'une très grande précision n'est pas nécessaire, seuls les points P1 et PO sont visés pour chaque plage, ces deux points définissant le point Prp appartenant à la plage réelle.

Lorsqu'un plan est sélectionné, il faut l'orienterde façon à obtenir le défaut le plus petit, ce plan étant un plan moyen compris entre deux plans extrêmes.

Une première série de corrections par rotation autour des trois axes permet d'obtenir un référentiel tel que la distance des plages réelles des catégories sélectionnées à leurs plans théoriques respectifs soit optimale.

Il faut alors calculer les translations à effectuer pour assurer l'usinage sur toutes les plages du bâti. Le calcul de la translation selon un axe est déterminé par la demi-distance entre les deux plages situées les plus près de leurs plans théoriques respectifs et représentant chacune sa catégorie.

Dans le cas où toutes les plages d'un même plan ont la même orientation, on calcule une translation telle que la plage réelle la plus proche de son plan théorique soit située à 10 mm de ce même plan après correction, ce qui entraîne un usinage forfaitaire minimal de 10 mm de la plage.

Lors de l'accrochage du dispositif d'usinage sur le bâti, le poids de celui-ci n'étant pas négligeable, il se produira des déformations en flexion des poutres du bâti, qui peuvent également subir des efforts de torsion selon l'orientation du dispositif d'usinage. Toutes ces déformations sont de type élastique, et les éléments déplacés retrouveront leur position après l'usinage. Toutefois, de telles déformations sont incompatibles avec la précision recherchée, et doivent être compensées.

Deux types de corrections sont prévus :
a) une simple compensation mécanique, consistant à maintenir en place, pendant la durée de l'opération, le système de manutention du dispositif d'usinage. De ce fait, la poutre d'appui du bâti ne subira qu'une partie du poids du dispositif d'usinage ;
b) comme néanmoins des déformations restent toujours possibles, on utilisera de plus une compensation calculée, pour déterminer des coordonnées corrigées qui seront utilisées pour commander le dispositif d'usinage.

En effet, la mire utilisée lors de la visée d'orientation comporte une embase magnétique solidement plaquée sur la plage et solidaire de celle-ci lors de la manoeuvre d'accrochage.

En visant les trois points P1,P2,P3, on détermine un trièdre associé à la mire avant l'accrochage du dispositif d'usinage. La mire ne se déplaçant pas par rapport à la plage au cours de cette opération, son mouvement correspond au mouvement de la plage réelle, et aussi à celui de la plage théorique, l'écart entre celles-ci étant faible par rapport aux dimensions du bâti.

La transformation à effectuer afin de corriger les mouvements engendrées par l'accrochage du dispositif d'usinage sur le bâti revient à considérer que le repère spatial affecté au point Ctp s'est déplacé et orienté de façon telle que les points de la mire visés avant l'accrochage et après l'accrochage du dispositif d'usinage sur le bâti sont confondus. Cette transformation permet d'identifier les mouvements de la plage réelle et doit être appliquée à tous les éléments (points et vecteur) de la plage théorique.

Une fois effectué le bridage du dispositif d'usinage sur le bâti, on met en route un processus d'initialisation permettant d'amener les différents axes du dispositif d'usinage dans une position prédéterminée. La géométrie de ce dernier est ainsi parfaitement déterminée.

La position initiale de chaque axe peut être la suivante :
- axe Z en butée haute,
- axes X et Y à mi-course,
- axes de rotation autour de X et Y à mi-course,
- plateau de descente de perçage bloqué contre le plateau de correction d'assiette.

Dans cette position initiale, l'axe de rotation de l'outil est parallèle à l'axe Z de déplacement du dispositif d'usinage, et le plan de travail de l'outil est parallèle au plan formé par les axes X et Y du dispositif d'usinage.

En visant les points MO, M1 et M2 du dispositif d'usinage (situés par exempte dans le plan de la table X,Y), il est possible de connaitre :
- l'orientation de l'outil dans l'espace du bâti,
- l'orientation du dispositif d'usinage dans cet espace,
- la position de n'importe quel point appartenant au dispositif d'usinage et, plus particulièrement, la position du point d'intersection des deux axes de rotation du dispositif d'usinage, qui représente l'origine des mouvements.

A partir de là, il est possible de calculer les corrections à apporter au plan de l'outil pour l'amener dans un plan parallèle au plan de la surface de référence ou plage théorique, en jouant sur les possibilités de rotation autour des axes X et Y, comme défini précédemment.

Après avoir effectué les corrections nécessaires pour amener le plan de l'outil (par exemple une fraise) parallèlement au plan de la surface de référence, il convient d'élaborer les commandes à fournir à l'axe Z afin de réaliser l'usinage, ainsi qu'aux axes X et Y (table à mouvements croisés).

En particulier, la profondeur maximale de fraisage étant de 1 mm, on calculera les cotes de l'outil selon l'axe Z au cours de chacune des passes. Pour cela, il faut déterminer au préalable le point le plus éloigné du plan définitif. Ce point est l'un des quatre coins de la plage à usiner. Il faut donc calculer les coordonnées des quatre coins de la plage, la différence entre leurs cotes et le plan de la plage définitif donnant la quantité de matière à enlever et donc le nombre des passes d'usinage.

On notera que, pour une éventuelle opération de perçage, les calculs sont simplifiés du fait que les coordonnées du point à atteindre par l'extrémité de l'outil sont celles des trous à exécuter, qui ont été définies lors de la conception du bâti et sont alors exprimées dans le repère lié à la machine.

De façon résumée, pour piloter le dispositif d'usinage, il suffit d'écrire que les coordonnées de l'extrémité de l'outil et celles du point à atteindre, exprimées dans le repère lié à la machine, sont confondues.

## Revendications

1. Procédé de réalisation d'une surface de référence plane, définie par une équation déterminée, sur un bâti d'assemblage d'une structure, à partir d'une surface brute,
caractérisé en ce que :
- on emmagasine, dans des moyens de mémoire (4), les données relatives à l'équation de ladite surface de référence ;
- on détermine, à l'aide de moyens de visée optiques (5,7), des données permettant de calculer l'équation de ladite surface brute (3) ;
- on compare, dans une unité de traitement d'informations (10), les données relatives, d'une part, à l'équation de ladite surface de référence et, d'autre part, à l'équation de ladite surface brute ;
- on positionne un dispositif d'usinage mobile (12) au voisinage de ladite surface brute (3) ; et
- on rectifie, à l'aide dudit dispositif d'usinage (12) commandé par des ordres déterminés en fonction de ladite comparaison et fournis par ladite unité de traitement d'informations (10), ladite surface brute, de façon à faire coïncider progressivement le plan de celle-ci avec celui de ladite surface de référence.

2. Procédé selon la revendication 1,
caractérisé en ce que, après un processus d'initialisation permettant d'amener les différents axes du dispositif d'usinage (12) dans une position prédéterminée, le plan de travail de l'outil (18) de ce dernier est amené parallèlement au plan de ladite surface de référence.

3. Procédé selon la revendication 1 ou la revendication 2,
caractérisé en ce que les ordres de commande du dispositif d'usinage (12) fournis par ladite unité de traitement d'informations (10) sont corrigés pour tenir compte de la déformation du bâti (1) engendrée par l'installation du dispositif d'usinage (12) sur celui-ci.

4. Système pour la réalisation d'une surface de référence plane, définie par une équation déterminée, sur un bâti d'assemblage d'une structure, à partir d'une surface brute, pour la mise en oeuvre du procédé selon l'une quelconque des revendications 1 à 3,
caractérisé en ce qu'il comprend :
- des moyens de mémoire (4) pour emmagasiner les données relatives à l'équation de ladite surface de référence ;
- des moyens de visée optiques (5,7) pour déterminer des données permettant de calculer l'équation de ladite surface brute (3) ;
- un dispositif d'usinage mobile (12), adapté pour être monté, de façon amovible, sur une poutre du bâti (1) au voisinage de ladite surface brute (3) ; et
- une unité de traitement d'informations (10), adaptée pour comparer les données relatives, d'une part, à l'équation de ladite surface de référence et, d'autre part, à l'équation de ladite surface brute, et fournir, à partir de cette comparaison, des ordres audit dispositif d'usinage (12) ainsi commandé de façon à faire coïncider progressivement le plan de ladite surface brute avec celui de ladite surface de référence.

5. Système selon la revendication 4,
caractérisé en ce que ledit dispositif d'usinage (12) est monté sur une poutre (2) du bâti (1) au moyen de deux cadres rectangulaires (13) supportant un plateau (15) bloqué contre le dessous de la poutre (2).

6. Système selon la revendication 4 ou la revendication 5,
caractérisé en ce que ledit dispositif d'usinage (12) comporte une table à mouvements croisés X,Y (23).

7. Système selon la revendication 6,
caractérisé en ce que la table à mouvements croisés X,Y (23) est solidaire d'un premier plateau (28) pouvant tourner autour d'un premier axe Y, l'ensemble table-premier plateau étant lui-même monté sur un second plateau (29) pouvant tourner autour d'un second axe X orthogonal audit premier axe et parallèle à ladite table.

8. Système selon la revendication 6 ou la revendication 7,
caractérisé en ce que ledit dispositif d'usinage (12) comporte des moyens de translation (39-46) selon un troisième axe Z orthogonal au plan de ladite table à mouvements croisés X,Y (23).

9. Système selon l'une quelconque des revendications 4 à 8,
caractérisé en ce que ledit dispositif d'usinage (12) comporte un outil (18) entraîné en rotation par l'intermédiaire d'un engrenage comportant un pignon conique (20) engrenant avec une roue conique (21) liée à l'arbre (22) de l'outil (18).

10. Système selon l'une quelconque des revendications 4 à 9,
caractérisé en ce que lesdits moyens de visée optiques sont constitués par un dispositif informatique de mesure à distance muni de théodolites électroniques (5) reliés à un calculateur (7).

11. Système selon l'une quelconque des revendications 4 à 10,
caractérisé en ce que lesdits moyens de visée optiques (5,7) sont associés à des moyens de mémoire supplémentaires (4) dans lesquels sont emmagasinées les données relatives aux équations d'une pluralité de surfaces de référence.

## Patentansprüche

1. Verfahren, um an einer Zusammenbauvorrichtung einer Konstruktion aus einer rohen Fläche eine durch eine bestimmte Gleichung definierte ebene Bezugsfläche zu verwirklichen,
dadurch gekennzeichnet, daß:
- in Mitteln (4) die Daten der Gleichung für die Bezugsfläche gespeichert werden;
- mit Hilfe von optischen Visiermitteln (5,7) Daten bestimmtwerden, mit denen die Gleichung der rohen Fläche (3) berechnet werden kann;
- in einer Informationsverarbeitungseinheit (10) einerseits die Daten der Gleichung der Bezugsfläche und andererseits die Daten der Gleichung der rohen Fläche verglichen werden;
- eine ortsveränderliche Bearbeitungsvorrichtung (12) an der rohen Fläche (3) angebracht wird und
- mit der Bearbeitungsvorrichtung (12), die durch bestimmte Befehle in Abhängigkeit vom vorgenommenen Vergleich, die von der Informationsverarbeitungseinheit (10) abgegeben werden, die rohe Fläche so geschliffen wird, daß deren Ebene schrittweise mit der der Bezugsfläche in Übereinstimmung gebracht wird.

2. Verfahren nach Anspruch 1,
dadurch gekennzeichnet, daß nach einem Initialisierungsprozeß, durch den die verschiedenen Achsen der Bearbeitungsvorrichtung (12) in eine vorbestimmte Lage gebracht werden können, die Arbeitsebene des Werkzeugs (18) derselben parallel zur Ebene der Bezugsfläche eingestellt wird.

3. Verfahren nach Anspruch 1 oder Anspruch 2, dadurch gekennzeichnet, daß die Steuerbefehle der Bearbeitungsvorrichtung (12) aus der Informationsverarbeitungseinheit (10) korrigiert werden, um die Verformung der Bauvorrichtung (1) zu berücksichtigen, die durch die Anbringung der Bearbeitungsvorrichtung (12) an demselben entsteht.

4. System, um an einer Zusammenbauvorrichtung einer Konstruktion aus einer rohen Fläche eine durch eine bestimmte Gleichung definierte ebene Bezugsfläche zu verwirklichen, zur Anwendung des Verfahrens nach einem der Ansprüche 1 bis 3,
dadurch gekennzeichnet, daß es umfaßt:
- Mittel (4) zum Speichern der Daten für die Gleichung der Bezugsfläche;
- optische Visiermittel (5,7) zur Bestimmung der Daten, mit denen die Gleichung der rohen Fläche (3) berechnet werden kann;
- eine ortsveränderliche Bearbeitungsvorrichtung (12), die lösbar an einem Träger der Bauvorrichtung (1) im Bereich der rohen Fläche (3) angebracht werden kann, und
- eine Informationsverarbeitungseinheit (10), mit der die Daten einerseits für die Gleichung der Bezugsfläche und andererseits für die Gleichung der rohen Fläche verglichen werden können, und die ausgehend von diesem Vergleich Befehle an die Bearbeitungsvorrichtung (12) gibt, die so gesteuert wird, daß die Ebene der rohen Fläche schrittweise mit der Ebene der Bezugsfläche in Übereinstimmung gebracht wird.

5. System nach Anspruch 4,
dadurch gekennzeichnet, daß die Bearbeitungsvorrichtung (12) an einem Träger (2) der Bauvorrichtung (1) mit Hilfe von zwei rechteckigen Rahmen (13) angebracht wird, auf der sich eine Platte (15) befindet, die gegen die Unterseite des Trägers (2) geklemmt wird.

6. System nach Anspruch 4 oder Anspruch 5,
dadurch gekennzeichnet, daß die Bearbeitungsvorrichtung (12) einen Tisch mit Kreuzbewegungen X,Y (23) hat.

7. System nach Anspruch 6,
dadurch gekennzeichnet, daß der Tisch mit Kreuzbewegungen X,Y (23) mit einer ersten Platte (28) verbunden ist, die sich um eine erste Achse Y drehen kann, wobei die Einheit Tisch-erste Platte ihrerseits an einer zweiten Platte (29) angebracht ist, die sich um eine zweite Achse X orthogonal zur ersten Achse und parallel zum Tisch drehen kann.

8. System nach Anspruch 6 oder Anspruch 7,
dadurch gekennzeichnet, daß die Bearbeitungsvorrichtung (12) Mittel (39-46) zur Translationsbewegung nach einer dritten Achse Z orthogonal zur Ebene des Tischs mit Kreuzbewegungen X,Y (23) hat.

9. System nach einem der Ansprüche 4 bis 8,
dadurch gekennzeichnet, daß die Bearbeitungsvorrichtung (12) ein Werkzeug (18) hat, das durch ein Getriebe mit einem Kegelritzel (20), das in ein mit der Welle (22) von Werkzeug (18) verbundenes Kegelrad (21) eingreift, in Drehung versetzt wird.

10. System nach einem der Ansprüche 4 bis 9,
dadurch gekennzeichnet, daß die optischen Visiermittel aus einer Fernmeß-Informatikvorrichtung mit elektronischen Theodoliten (5) bestehen, die mit einem Rechner (7) verbunden sind.

11. System nach einem der Ansprüche 4 bis 10,
dadurch gekennzeichnet, daß die optischen Visiermittel (5,7) mit zusätzlichen Speichermitteln (4) verbunden sind, in denen die Daten für die Gleichungen einer Vielzahl von Bezugsflächen gespeichert sind.

## Claims

1. Method for producing a flat reference surface, defined by a determined equation, on a jig for assembling a structure, starting from a rough surface, characterized in that:
- the data relating to the equation of the said reference surface is stored in memory means (4);
- with the aid of optical sighting means (5, 7), data allowing the equation of the said rough surface (3) to be calculated is determined;
- the data relating, on the one hand, to the equation of the said reference surface and, on the other hand, to the equation of the said rough surface is compared in an information-processing unit (10);
- a movable machining device (12) is positioned close to the said rough surface (3); and
- the said rough surface is straightened out, with the aid of the said machining device (12) controlled by orders determined as a function of the said comparison and provided by the said information-processing unit (10) in order to cause the plane of this rough surface to coincide progressively with that of the said reference surface.

2. Method according to Claim 1, characterized in that, after an initialization process making it possible to bring the various axes of the machining device (12) into a predetermined position, the working plane of the tool (18) of the latter is brought parallel to the plane of the said reference surface.

3. Method according to Claim 1 or Claim 2, characterized in that the orders for controlling the machining device (12), which are provided by the said information-processing unit (10), are corrected in order to take account of the deformation of the jig (1) brought about by the installation of the machining device (12) on the latter.

4. System for producing a flat reference surface, defined by a determined equation, on a jig for assembling a structure, starting from a rough surface, for the implementation of the method according to any one of Claims 1 to 3, characterized in that it comprises:
- memory means (4) for storing the data relating to the equation of the said reference surface;
- optical sighting means (5, 7) for determining data allowing the equation of the said rough surface (3) to be calculated;
- a movable machining device (12) designed to be mounted, removably, on a girderofthe jig (1) close to the said rough surface (3); and
- an information-processing unit (10) designed to compare the data relating, on the one hand, to the equation of the said reference surface and, on the other hand, to the equation of the said rough surface and to provide, on the basis of this comparison, orders to the said machining device (12) thus controlled in order to cause the plane of the said rough surface to coincide progressively with that of the said reference surface.

5. System according to Claim 4, characterized in that the said machining device (12) is mounted on a girder (2) of the jig (1) by means of two rectangular frames (13) supporting a plate (15) immobilized against the underside of the girder (2).

6. System according to Claim 4 or Claim 5, characterized in that the said machining device (12) includes an X, Y cross table (23).

7. System according to Claim 6, characterized in that the X, Y cross table (23) is secured to a first plate (28) which can rotate about a first axis Y, the table-first plate assembly itself being mounted on a second plate (29) capable of rotating about a second axis X orthogonal to the said first axis and parallel to the said table.

8. System according to Claim 6 or Claim 7, characterized in that the said machining device (12) includes means (39-46) for translational movement along a third axis Z orthogonal to the plane of the said X, Y cross table (23).

9. System according to any one of Claims 4 to 8, characterized in that the said machining device (12) includes a tool (18) which is rotationally driven by means of gearing including a bevel gear (20) meshing with a bevel gear wheel (21) connected to the shaft (22) of the tool (18).

10. System according to any one of Claims 4 to 9, characterized in that the said optical sighting means are made up of a computerized remote- measurement device equipped with electronic theodolites (5) connected to a computer (7).

11. System according to any one of Claims 4 to 10, characterized in that the said optical sighting means (5, 7) are associated with additional memory means (4) in which the data relating to the equations of a plurality of reference surfaces is stored.
